# EUROPÄISCHE PATENTSCHRIFT

(11) **EP 1 197 701 B1**
(45) Veröffentlichungstag und Bekanntmachung des Hinweises auf die Patenterteilung: **03.05.2006**
(21) Anmeldenummer: 01123285.7
(22) Anmeldetag: 05.10.2001
(51) Int. Cl.: F16L 13/14

(54) **Verbindungsvorrichtung für medienführende Leitungen**
Connection device for fluid conveying conduits
Dispositif de connection pour conduites de transport de fluide

(30) Priorität: 10.10.2000 DE 10050006
(43) Veröffentlichungstag der Anmeldung: 17.04.2002
(73) Patentinhaber: Interhydraulik Gesellschaft für Hydraulikkomponenten mbH, 59379 Selm (DE)
(72) Erfinder: Barth, Thomas, 34359 Reinhardhagen (DE); Barth, Wolfgang, 34359 Reinhardhagen (DE)

(56) Entgegenhaltungen:
- DE-A- 19 543 103
- DE-C- 19 856 523
- US-A- 5 317 799
- US-A- 5 707 087
- US-A- 5 775 740

## Beschreibung

Die Erfindung bezieht sich auf eine Verbindungsvorrichtung für medienführende Leitungen wie Stahl-Rohrleitungen, flexible Rohre und dergl., bestehend aus dem eigentlichen Anschlußteil für den fortführenden Anschluß von der Verbindung und der Verbindung als den eigentlichen Rohreinbindebereich.

Aus der DE 197 35 261 C1 ist eine Anschlußvorrichtung für ein Kunststoffrohr bekannt geworden. Diese Anschlußvorrichtung besteht aus einem Fitting, der einen Fittingkörper mit einem von diesem abstehenden Stützkörper aufweist, auf den das im Durchmesser verringerbare Anschlußende eines anzuschließenden Kunststoffrohres aufschiebbar ist und einer Kunststoff-Schrumpfhülse. Die Kunststoff-Schrumpfhülse ist über das auf den Stützkörper aufgeschobene Anschlußende des Kunststoffrohres und über einen an den Stützkörper angrenzenden Übergangsabschnitt des Fittingkörpers aufschiebbar. Der Fittingkörper weist innerhalb seines Übergangsbereiches mindestens eine radiale Einschnürung und/oder mindestens einen umlaufenden radialen Vorsprung zur axialen Sicherung der Schrumpfhülse im auf dem Fittingkörper aufgeschrumpften Zustand auf.

Aus der DE-C-198 56 523 ist eine Vorrichtung bekannt, zur Herstellung einer Kupplung zweier Rohrenden, die mindestens aus einem Grundkörper und zwei Presshülsen besteht.

Ferner offenbart die Figur 11 der US-A-5 707 087, die als nächstliegender Stand der Technik für die vorliegende Erfindung anzusehen ist, eine Verbindungsvorrichtung für medienführende Leitungen wie Stahlrohrleitungen, flexible Rohre und dergl., bestehend aus dem eigentlichen Anschlußteil für den fortführenden Anschluß von der Verbindung und der Verbindung als eigentlichen Rohreinbindebereich, wobei der Rohreinbindebereich eine Primärabdichtungszone, eine Haltezone und eine Ausgleichszone aufweist, wobei die Primärabdichtungszone am innersten Ende des Einbindebereiches der Verbindungsvorrichtung angeordnet ist, an die sich nach außen hin die Haltezone mit einem Halteprofil anschließt und im Anschluß nach außen daran die eigentliche Ausgleichszone angeordnet ist, wobei die Haltezone mindestens ein oder mehrere Haltezähne aufweist und im Bereich der Primärabdichtungszone mindestens eine weitere Dichtung in Form eines O-Ringes angeordnet ist.

Im Allgemeinen weisen lötlose Verschraubungen z. B. nach DIN 2353 zum Halten und Dichten des Rohres Schneid- oder Keilringe mit Doppelfunktion auf. Durch Anziehen einer Überwurfmutter oder auch einer Überwurfschraube wird der Ring aus buntem Metall oder gehärtetem Stahl über einen Konus mit einer oder mehreren Schneidkanten in das Rohr eingeschnitten. Durch weiteres Anziehen wird eine axiale und radiale Kompression erzeugt, die auf den meist konischen oder kugelförmigen Flächen abdichtet. Neuere Varianten werden auch mit Elastomer-Dichtungen ausgeführt.

Ferner bekannte lötlose Rohrverschraubungen z. B. nach SAE J514 erfordern einen Bördelbund mit sehr hohen Oberflächenqualitäten. Dieser Bördelbund wird zwischen Überwurfmutter und Gegenstück durch Anziehen der Mutter eingeklemmt. Durch diese Klemmung werden die Haltekraft und die Abdichtung erreicht. Bei diesen bekannten Verbindungsarten treten immer wieder Leckagen durch mögliche Montagefehler, fehlerhafte Drehmomente oder durch Vibrationen und starke Temperaturschwankungen auf.

Der Erfindung liegt nun die Aufgabe zugrunde, bei einer Vorrichtung der eingangs genannten Art die geschilderten Nachteile auszuschalten und eine Ausbildung zu schaffen, die eine wesentlich vereinfachte und verbesserte Befestigung solcher Verbindungen sicherstellt.

Diese Aufgabe wird gemäß der Erfindung bei einer Vorrichtung nach Anspruch 1 gelöst.

Mit der erfindungsgemäßen Ausgestaltung werden folgende Vorteile erzielt:
- Keine nachträgliche Rohrendenbearbeitung erforderlich.
- Das Rohr wird auf Mass gesägt, entgratet, gereinigt, in die Verbindung eingebracht und verpresst.
- Die Konfektion ist einsatzbereit.
- Längentoleranzen durch Sägeschnitte können bis zu 1,5 mm pro Verbindung ausgeglichen werden.
- Die bereits fertig oberflächenbehandelten Zusammenbaukomponenten, galvanisch verzinkt oder mit anderem Korrosionsschutz versehen, können in ihrer Lage vor der Endkonfektion (Verpressen) vorfixiert werden. Verdrehung, Einbauwinkel und Einbaumasse können sehr präzise voreingestellt werden.
- Die bei Schweiss- und Lötverbindungen übliche nachträgliche Korrosionsschutzbehandlung entfällt.
- Rostbildung durch Säurereste in den Rohrleitungen wird dadurch ausgeschlossen.
- Alle damit verbundenen Reinigungs- und Rostschutzmaßnahmen entfallen.
- Leckage durch fehlerhafte Montage, Temperaturwechsel oder durch Vibration ist nicht möglich.
- Anzugsdrehmomente entfallen.
- Pressfehler sind nicht möglich, da der Pressbackensatz nur den für den zu verpressenden Rohrdurchmesser vorgesehenen Pressdurchmesser zuläßt (Blockpressung).

Im nachfolgenden wird die Erfindung an Hand von in den Zeichnungen dargestellten Ausführungsbeispielen näher erläutert.

In der Zeichnung zeigt:
- Fig. 1: Querschnitt der Verbindungsvorrichtung,
- Fig. 2: die Verbindungsvorrichtung mit Anschlußteil,
- Fig. 3: Darstellung der Verbindungsvorrichtung mit ihren 3 Funktionen,
- Fig. 4: den Rohreinbindebereich gefügt und positioniert (unverpreßt),
- Fig. 5: den Rohreinbindebereich gefügt, unverpreßt mit O-Ring-Dichtung,

Der Anmeldungsgegenstand dient zur Konfektion von Rohrleitungen mit Anschlußteilen und findet insbesondere Verwendung im Bereich der medienführenden Rohrleitungen mit Anschlußteilen, Übergänge zu Schlauchanschlüssen, flexiblen Rohranschlüssen und dergl. Die darin transportierten Medien können gasförmig oder flüssig sein. Der Druckbereich entspricht dem maximal zulässigen Betriebsdruck des zum Einsatz kommenden Rohres.

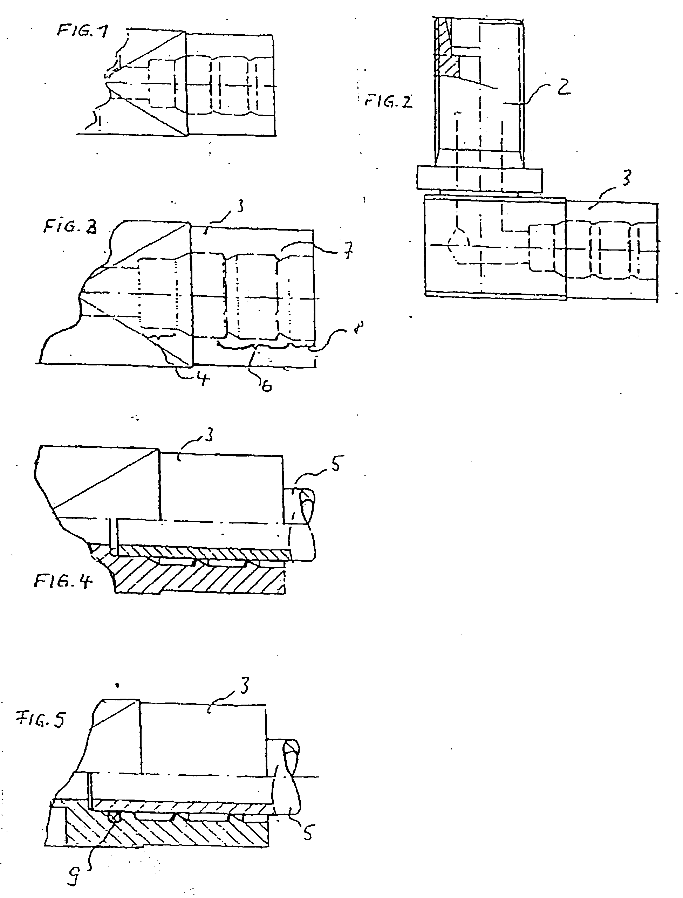

Bei der in den Zeichnungen dargestellten Rohranschlußpressverbindung handelt es sich um eine nichtlösbare, radiale Pressverbindung des Anschlußteiles mit handelsüblichen Rohren. Das Anschlußteil 1 hat zwei Funktionsbereiche:
1. den von der Verbindung fortführenden Anschlußbereich. Der fortführende Anschluß 2 kann frei zu jedem in der Industrie oder am Markt oder dergl. angewendeten Verbindungsanschluß für medienführenden Leitungen auch Schlauchleitungen und dergl. angewandt werden. Dieser Anschluß 2 ist frei gestaltbar in Form und Winkel. Gewindeanschlüsse als Außen- oder Innengewinde sowie Flanschanschlüsse sind möglich (Fig. 2).
2. den auf dem Rohr zu verpressenden Rohreinbindebereich 3. Dieser Bereich hat das eingebundene (verpresste) Rohr sicher und dicht für jede dem Rohr zugeordnete und zugelassenen Druck- Zug- oder dynamische Belastung festzuhalten (Fig. 2).

Dieser Rohreinbindebereich 3 setzt sich konstruktiv aus vier Teilfunktionen zusammen (Fig. 3):

Grundpaßbohrung 4 als Primärabdichtung mit folgender Funktion:
a) Aufnahme des Rohres 5 im Nenndurchmesser, auf welches der Anschluß aufgebracht werden soll.
b) Primärabdichtung durch Preßsitz des Rohres in der Paßbohrung.
c) Rohrschnitt-Toleranzausgleich bis zu 1,5 mm durch die Länge der Paßbohrung möglich.
   Die Funktionen a und b bleiben durch die Preßsitzbohrung erhalten.
d) Fixierung des Rohres 5 im Anschlußteil vor dem Verpressen. Die zu verbindenden Teile, Rohr- und Anschlußteil, können vor dem Verpressen auf Längentoleranz, Verdrehwinkel und dergl. sicher zusammengefügt und eingestellt werden. Durch diese Fügetechnik sind Transporte von Arbeitsplatz zu Arbeitsplatz möglich, ohne daß sich die vorgefügten Teile in ihrer Lage verändern.

Die Haltezone 6 dient als Halteprofil für das aufzunehmende Rohr 5 und zur Axialführung des Rohres vor dem Pressen sowie zur Stabilisierung des Rohrnenndurchmessers nach dem Pressen, d. h. die Distanz der Haltezähne 7 und das Fertigpressmaß sind derart aufeinander abgestimmt, daß der ursprüngliche Außendurchmesser des Rohres vor dem Pressen auch nach dem Pressen erhalten bleibt. Auf diese Weise wird gewährleistet, daß sich die Summe der Haltekräfte der fertig verpreßten Verbindung auf dem Haltezahn 7 und die Oberflächenreibung des Rohres in der verpreßten Verbindungsvorrichtung anteilig verteilt.

Die nachfolgende Ausgleichszone 8 dient für einen möglichst spannungsfreien Auslauf des Rohres aus der Preßverbindung. Die Durchmesserausgleichzone erhält nach dem Preßvorgang exakt den Innendurchmesser, der auf den Rohraußendurchmesser des eingepreßten Rohres abgestimmt ist. Auf diese Weise ist ein Ausschluß von Spannungs- oder Ermüdungsbrüchen durch die Kaltverformung in der Haltezone, gewährleistet durch die radiale Abstützung des Rohres hinter dem zweiten Zahn der Haltezone, sichergestellt.

Gemäß Figur 5 ist ergänzend zur guten Primärabdichtung (mechanische Abdichtung Metall auf Metall) eine Elastomer-Dichtung in Form einer O-Ring 9 im Bereich der Grundbohrung eingesetzt.

## Patentansprüche

1. Verbindungsvorrichtung für medienführende Leitungen wie Stahlrohrleitungen, flexible Rohre und dergl bestehend aus dem eigentlichen Anschlußteil für den fortführenden Anschluß (2) von der Verbindung und der Verbindung als eigentlichen Rohreinbindebereich (3), wobei der Rohreinbindebereich (3) eine Primärabdichtungszone (4), eine Haltezone (6) und eine Ausgleichszone (8) aufweist und die Primärabdichtungszone (4) durch eine Grundbohrung in Form einer Passbohrung gebildet wird, zur Aufnahme und ersten Abdichtung durch Presssitz des Rohres in der Passbohrung, und die Haltezone (6) mindestens ein nach innen weisendes Halteprofil aufweist und die Ausgleichszone (8) so ausgebildet ist, dass ihr Durchmesser nach der Verpressung dem Rohraußendurchmesser entspricht, wobei die Primärabdichtungszone (4) am innersten Ende des Einbindebereiches der Verbindungsvorrichtung angeordnet ist, an die sich nach außen hin die Haltezone (6) mit dem Halteprofil anschließt und im Anschluß nach außen daran die eigentliche Ausgleichszone (8) angeordnet ist, wobei die Haltezone (6) mindestens ein oder mehrere nach innen gerichtete Haltezähne (7) aufweist und im Bereich der Primärabdichtungszone (4) mindestens eine weitere Dichtung in Form eines O-Ringes (9) angeordnet ist.

## Claims

1. Connection device for media-carrying conduits such as steel pipe conduits, flexible pipes and the like, consisting of the actual connector part for the continuous connector (2) of the connection, and of the connection as the actual pipe integration region (3), wherein the pipe integration region (3) comprises a primary sealing zone (4), a retaining zone (6) and an equalisation zone (8) and the primary sealing zone (4) is formed as a fitting bore by a base bore, for receiving and first seal by press-fitting the pipe in the fitting bore and the retaining zone (6) comprises at least one inwardly-facing retaining profile and the equalisation zone (8) is formed such that its diameter, after compression, corresponds to the pipe outer diameter, wherein the primary sealing zone (4) is disposed on the innermost end of the integration region of the connection device, which is outwardly adjoined by the retaining zone (6) with the retaining profile and disposed outwardly adjacent thereto is the actual equalisation zone (8), wherein the retaining zone (6) comprises at least one or several inwardly-directed retaining teeth (7) and at least one further seal in the form of an O-ring (9) is disposed in the region of the primary sealing zone (4).

## Revendications

1. Dispositif de connexion pour conduites de transport de fluide, telles que des conduites en tubes d'acier, des tuyaux flexibles et analogues, comprenant la pièce de raccordement proprement dite pour le raccordement suivant (2) de la connexion, et la connexion en tant que zone proprement dite d'emboîtement des tuyaux (3), la zone d'emboîtement des tuyaux (3) présentant une zone d'étanchéification primaire (4), une zone de maintien (6) et une zone d'ajustement (8), et la zone d'étanchéification primaire (4) étant formée par un alésage borgne sous la forme d'un alésage calibré, destiné à la réception et à une première étanchéification, par mise en place par pressage du tuyau dans l'alésage calibré, et la zone de maintien (6) présentant au moins un profil de maintien dirigé vers l'intérieur, et la zone d'ajustement (8) étant formée de telle sorte que son diamètre corresponde, après pressage, au diamètre extérieur du tuyau, la zone d'étanchéification primaire (4) étant agencée sur l'extrémité la plus interne de la région d'emboîtement du dispositif de connexion, à laquelle se raccorde vers l'extérieur la zone de maintien (6) avec le profil de maintien, et la zone d'ajustement (8) proprement dite étant agencée en s'y raccordant à l'extérieur, la zone de maintien (6) présentant une ou plusieurs dents de maintien (7) dirigée vers l'intérieur, et au moins un joint (9) supplémentaire de forme torique étant agencé dans la région de la zone d'étanchéification primaire (4)
